**Europäisches Patentamt**

**European Patent Office**

**Office européen des brevets**

(19)

(11) Veröffentlichungsnummer: **0 007 607
B1**

(12)

# EUROPÄISCHE PATENTSCHRIFT

(45) Veröffentlichungstag der Patentschrift:
**10.02.82**

(21) Anmeldenummer: **79102595.0**

(22) Anmeldetag: **23.07.79**

(51) Int. Cl.³: **F 16 G 11/02**

(54) **Klemme zur Verbindung von Seilen.**

(30) Priorität: **22.07.78 DE 2832300**

(43) Veröffentlichungstag der Anmeldung:
**06.02.80 Patentblatt 80/3**

(45) Bekanntmachung des Hinweises auf die Patenterteilung:
**10.02.82 Patentblatt 82/6**

(84) Benannte Vertragsstaaten:
**AT BE CH FR GB IT LU NL SE**

(56) Entgegenhaltungen:

**FR-A-2 058 099**
**FR-A-2 333 146**
**GB-A-707 725**
**US-A-3 903 574**

(73) Patentinhaber: **Pfeifer Seil- und Hebetechnik, GmbH &
Co., Maximilianstrasse 4, D-8940 Memmingen (DE)**

(72) Erfinder: **Wilks, Gerhard, Braunstrasse 43,
D-8940 Memmingen (DE)**
Erfinder: **Grossmann, Günter, Kotzenbrühlstrasse 8,
D-8940 Memmingen (DE)**
Erfinder: **Sanz, Frans, Alpenweg 10,
D-7919 Betlinshausen (DE)**

(74) Vertreter: **Pfister, Helmut, Dipl.-Ing., Buxacher Strasse 9,
D-8940 Memmingen/Bayern (DE)**

Klemme zur Verbindung von Seilen

Die Erfindung betrifft eine Klemme zur Verbindung von Seilen, insbesondere zur Bildung von Netzen, bestehend aus einem unter Druck verformbaren Werkstoff mit zwei auf gegenüberliegenden Seiten der einstückigen Klemme angeordneten U-förmigen Ausnehmungen in die die zu verbindenden Seilstränge einlegbar sind, wobei die schenkelartigen Wände der U-förmigen Ausnehmungen nach dem Einlegen der Seilstränge gegeneinander gedrückt und verformt werden, um je einen den Seilstrang umschliessenden Ring zu bilden.

Seile, beispielsweise Drahtseile, aber auch Seile aus textilen Fasern werden für Netze verwendet, die zum Beispiel als Kletternetze für Kinderspielplätze od. dgl. dienen. Dabei ergibt sich das Problem, dass sich kreuzende Seile am Kreuzungspunkt miteinander zu verbinden sind. Soweit die Seile teilweise parallel laufen, bereitet die Verbindung der Seile keine Schwierigkeiten. Die Seile können durch Klemmhülsen miteinander verbunden werden, wobei beispielsweise die bekannten ovalen Klemmhülsen Anwendung finden, bei denen in den einen Kanal der Hülse die beiden Seile sinngemäss eingefädelt werden. Nach der Einfädelung werden die Klemmhülsen unter Druck plastisch verformt, wodurch sich eine feste Verbindung der beiden Seile erreichen lässt.

Von Nachteil ist bei dieser Konstruktion der Einfädelungsvorgang. Dieser Einfädelungsvorgang kann vermieden werden, wenn c-förmige Klemmen verwendet werden, die ähnliche wie die vorgenannten ovalen Klemmhülsen verformt werden, so dass zwei oder mehrere durchgeführte Seile fest miteinander verbunden sind. Mittels derartiger Klemmhülsen können auch ausreichende Haltekräfte übertragen werden.

Wenn sich die Seile jedoch beispielsweise in einem rechten Winkel kreuzen, können die vorgenannten Mittel nicht mehr angewandt werden. Um dennoch eine Verbindung der Seile am Kreuzungspunkt zu erhalten, ist es bekannt einen Ring einzufädeln. Dieser Ring liegt in der Ebene, die durch die sich kreuzenden Seile bestimmt ist und die Seile sind derart durch den Ring geführt, dass jedes Seil jeweils zwischen der einen Aussenfläche des Ringes und dem anderen Seil eingeklemmt ist.

Das Einfädeln der Ringe ist jedoch sehr umständlich und arbeitsaufwendig.

In der FR-A-2 058 099 ist eine Klemmeinrichtung beschrieben, wie diese eingangs wiedergegeben ist. Die Klemme besitzt zwei parallele U-förmige Ausnehmungen und hat im Grundriss im wesentlichen eine rechteckige Gestalt. Nach der Verformung der Klemme, in die zwei parallele Seile eingelegt sind, bleibt der Grundriss der Klemme im wesentlichen erhalten.

Sollen sich kreuzende Seilstränge miteinander verbunden werden, werden zwei derartige Klemmen benützt, die nach der Verformung durch eine Schraube und eine Mutter so miteinander verbunden werden, dass sich die Seilstränge sinngemäss kreuzen.

Bei dieser bekannten Klemme ist von Nachteil, dass die fertige Klemme verhältnismässig grosse Aussenabmessungen besitzt und dass sich insbesondere scharfe Aussenkanten ergeben und auch verhältnismässig spitzwinklige Ecken zwischen den einzelnen Flächen bzw. den Flächen an den Seilsträngen. Die scharfen Aussenkanten und die spitzwinkligen Innenecken können bei Spielnetzen für Kinder leicht zu Verletzungen führen.

In der FR-A-2 333 146 ist eine Klemme aus Plastikmaterial beschrieben, die beispielsweise aus zwei Hälften besteht, die um die Kreuzungsstelle von zwei Seilen herum mittels einer Form zusammengeschweisst werden. Auf diese Weise lässt sich eine beliebige Aussenkontur, insbesondere auch eine äussere Kugelform erreichen, so dass scharfe Kanten und spitzwinklige Ecken vermieden sind.

Beim Zusammenschweissen der beiden Formteile zur Bildung der Klemme ergibt sich jedoch das Problem, dass dieses Zusammenschweissen in einer Form am Netz zu erfolgen hat. Der Verbindungsvorgang muss daher an der Baustelle bzw. Montagestelle vorgenommen werden. Eine Kunststoffklemme bringt dabei oft nicht die notwendigen Festigkeitswerte und auch die Sorgfältigkeit des Schweissvorganges ist an der Bau- bzw. Montagestelle oft nicht sichergestellt. Die Anwendung von Metallklemmen bringt wegen der Wärmeeinwirkung und des Schweissvorganges zusätzliche Probleme.

Eine ähnliche Klemme wird auch in der GB-A-707 725 beschrieben, wobei bei einer Metallklemme Bohrungen für die Seilstränge vorgesehen sind und die Klemme nach dem Einfädeln zusammengedrückt wird. Dabei entstehen kugelförmige bzw. kegelstumpfförmige Aussenflächen. Insgesamt besitzt die Klemme jedoch eine Kreuzform.

Die Erfindung hat es sich zur Aufgabe gemacht, eine Klemme vorzuschlagen, die eine solche Gestalt besitzt und aus solchem Werkstoff besteht, dass sie an der Bau- oder Montagestelle immer einwandfrei und zuverlässig verarbeitbar ist. Dabei sollen hohe Festigkeitswerte erreicht werden, so dass der Materialaufwand gering bleiben kann und die Aussenabmessung der Klemme auch das äussere Erscheinungsbild beispielsweise eines Netzes für Kinderspielplätze nicht beeinträchtigt.

Die Klemme soll nach der Montage auch eine Aussenkontur besitzen, die Verletzungen ausschliesst.

Die Erfindung geht aus von einer Klemme der eingangs beschriebenen Art und schlägt vor, dass die Klemme vor der Verformung im wesentlichen die Form eines Doppelkegels aus zwei Kegelstümpfen aufweist, wobei die U-förmigen Ausnehmungen jeweils im Kegelstumpf angeordnet sind und dass nach dem Verformen die Aussenabmessungen der Klemme in allen Richtungen annähernd übereinstimmen.

Mittels der erfindungsgemässen Klemme ist es möglich, in einem einzigen Arbeitsgang die Seilstränge so zu verbinden, dass diese unlösbar und unverschiebbar in der Klemme festsitzen. Die Klemme besitzt minimale Aussenabmessungen, wodurch ein sehr geringer Materialaufwand entsteht und auch die Verformungskräfte zur Verformung der Klemme begrenzt bleiben. Scharfkantige Oberflächen sind sicher vermieden, was beispielsweise bei einem Kletternetz von Bedeutung ist.

Die erfindungsgemässe Klemme kann bei sich kreuzenden Seilsträngen angewandt werden. Die Ausnehmungen auf beiden Seiten der Klemme sind dann sinngemäss zueinander gekreuzt angeordnet. Die Erfindung ist auch bei parallelen Seilen anwendbar und es bereitet auch keine Probleme, wenn die Stränge am Kreuzungspunkt spitze Winkel einschliessen.

In den Unteransprüchen sind vorteilhafte Ausgestaltungen der Erfindung wiedergegeben.

In der Zeichnung sind einige Ausführungsbeispiele der Erfindung schematisch dargestellt. Es zeigen:

Fig. 1 eine perspektivische Darstellung von zwei sich kreuzenden Seilen die mittels einer erfindungsgemässen Klemme verbunden sind,

Fig. 2 einen Schnitt durch die Darstellung der Fig. 1 entsprechend der Schnittlinie II-II,

Fig. 3 bis 6 zwei Ansichten, eine Draufsicht und eine Unteransicht der Klemme nach den Fig. 1 und 2,

Fig. 7 eine Seitenansicht einer erfindungsgemässen Klemme im verarbeiteten Zustand in einer abgewandelten Ausführungsform,

Fig. 8 eine Draufsicht auf ein Ausführungsbeispiel der Fig. 7,

Fig. 9 bis 11 zwei Seitenansichten und eine Draufsicht des Ausführungsbeispiels das in den Fig. 7 und 8 gezeigt ist,

Fig. 12 und 13 eine abgewandelte Ausführungsform der Erfindung in Draufsicht und Seitenansicht und

Fig. 14 eine perspektivische Darstellung des Werkzeuges, das bei der Erfindung Verwendung findet.

Die Klemme 1 gemäss der Erfindung besteht vorzugsweise aus Aluminium. Es kann aber auch ein anderer Werkstoff Verwendung finden, beispielsweise Stahl oder auch Kunststoff, wobei beim Kunststoff für die Verformung auch eine Wärmeeinwirkung angewandt werden kann.

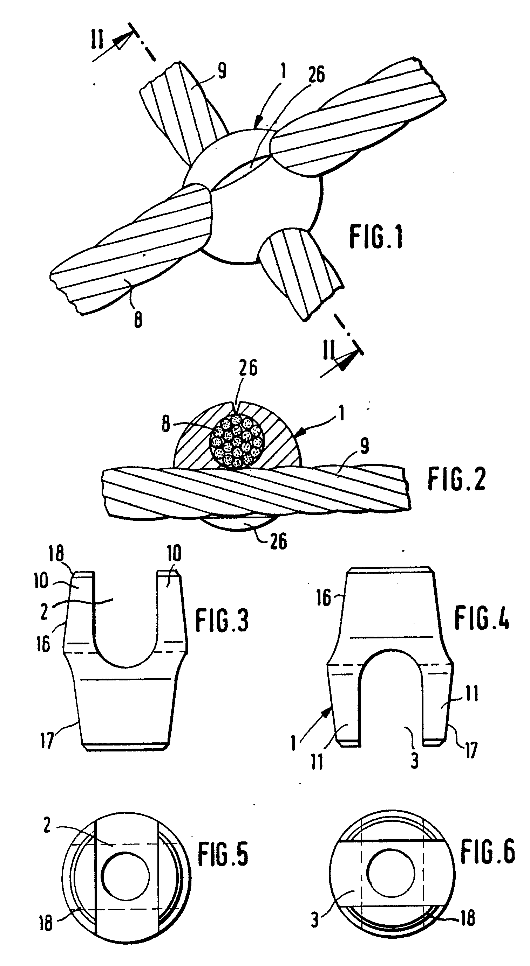

Die Klemme 1 nach den Fig. 1 bis 6 ist aus einem Rotationskörper gefertigt und die Gestalt ist so gewonnen, dass zunächst im wesentlichen ein Doppelkegel geformt wird, bestehend aus den beiden Kegeln 16 und 17. Der Kegelwinkel beträgt je etwa 15°, wobei jedoch Schwankungen zwischen 10 und 20° möglich sind. Auf diese Weise wird ein günstiges Verhältnis zwischen den Aussenabmessungen einerseits und den zu beherrschenden Verformungskräften bzw. den Abmessungen im fertigen Zustand erhalten.

In den Doppelkegel sind die Ausnehmungen 2 und 3 eingebracht, wobei die Tiefe dieser Ausnehmungen so gewählt ist, dass ihre Summe die gesamte Höhe der Klemme etwas übersteigt. Auf diese Weise wird erreicht, dass sich diese Ausnehmungen 2 und 3 im Mittelbereich durchdringen. Diese Bauweise hat zur Folge, dass sich die Seilstränge 8 und 9 an der Berührungsstelle verformen was den Vorteil mit sich bringt, dass die Gesamtabmessungen der Klemme 1 im fertigen Zustand etwas verringert sind.

Die Ausnehmung 2 wird von den Wänden 10 begrenzt, während die Ausnehmung 3 von den Wänden 11 begrenzt ist. Am oberen und unteren Ende des zu verformenden Rohlings empfiehlt es sich Abschrägungen 18 anzuordnen.

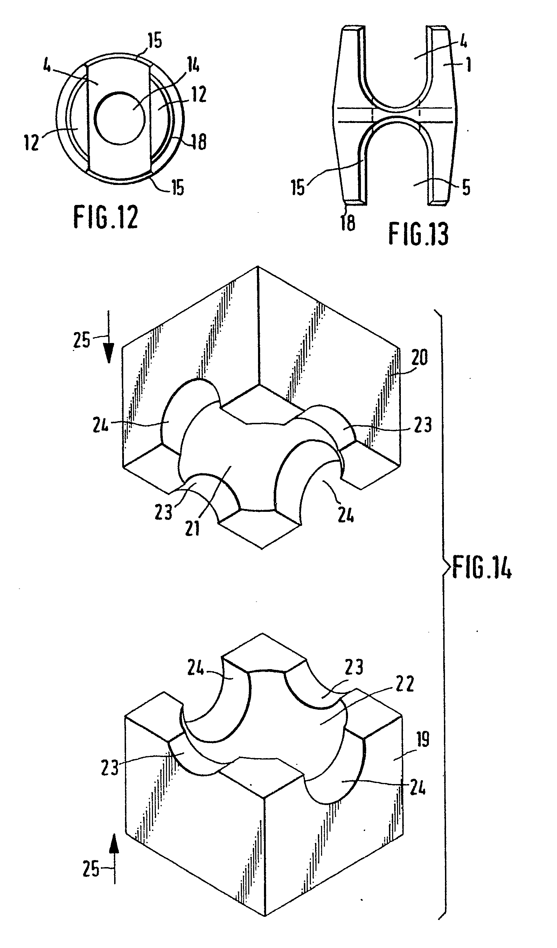

Zur Erreichung einer Klemmverbindung wird in der Ausnehmung 2 beispielsweise der Seilstrang 8 von zwei sich kreuzenden Seilsträngen eingelegt, während die Ausnehmung 3 den anderen Seilstrang 9 aufnimmt. Die so vorbereitete Verbindungsstelle wird in ein Werkzeug eingelegt, das aus zwei im wesentlichen gleichförmig ausgestalteten Teilen besteht, wie es in der Fig. 14 dargestellt ist.

Jeder der beiden Teile 19 und 20 des Werkzeugs besitzt eine halbkugelförmige Ausnehmung 21 bzw. 22 und die Wände ausserhalb der Ausnehmung 21 bzw. 22 sind mit halbzylinderförmigen Ausnehmungen 23 bzw. 24 ausgestattet. Die Seilkreuzung mit der unverformten Klemme wird in der Weise in das Werkzeug eingelegt, dass beispielsweise der untere Seilstrang 9 in die grösser ausgebildete Ausnehmung 24 eingelegt wird und die beiden Werkzeugteile 19 und 20 wirken jeweils in der Weise zusammen, dass sich immer die Ausnehmungen 23 und 24 ergänzen. Bei Anwendung eines entsprechenden Pressdruckes in Richtung der Pfeile 25 wird die Klemme 1 so verformt, dass im wesentlichen ein kugelförmiges Gebilde erhalten wird. Die Wände 10 und 11 nähern sich dabei einander bis sie sich berühren. Bei der fertigen Klemme wird ein kleiner keilförmiger Spalt 26 entstehen.

Die fertige Klemme hat nur vergleichsweise geringe Abmessungen, die ungefähr in allen Richtungen einander entsprechen. In aller Regel werden die erreichten Haltekräfte ausreichen.

Besonders günstig ist bei der Erfindung, dass, wie beispielsweise die Fig. 2 erkennen lässt, die Basis der verformten Wände 10 bzw. 11 verhältnismässig breit ausgebildet ist, so dass, obwohl sich die Wände nach der Verformung nur berühren und nicht miteinander verschweisst oder sonstwie verbunden sind, grosse Haltekräfte erzielt werden.

Die Presskräfte, von denen die Haltekräfte abhängen, sind den jeweils verarbeiteten Seilsträngen anzupassen. Werden Drahtseile verarbeitet, wird man höhere Presskräfte anwenden können als beispielsweise bei Seilen aus textilen Fasern oder Seilen, deren Aussenfläche von textilen Fasern gebildet ist.

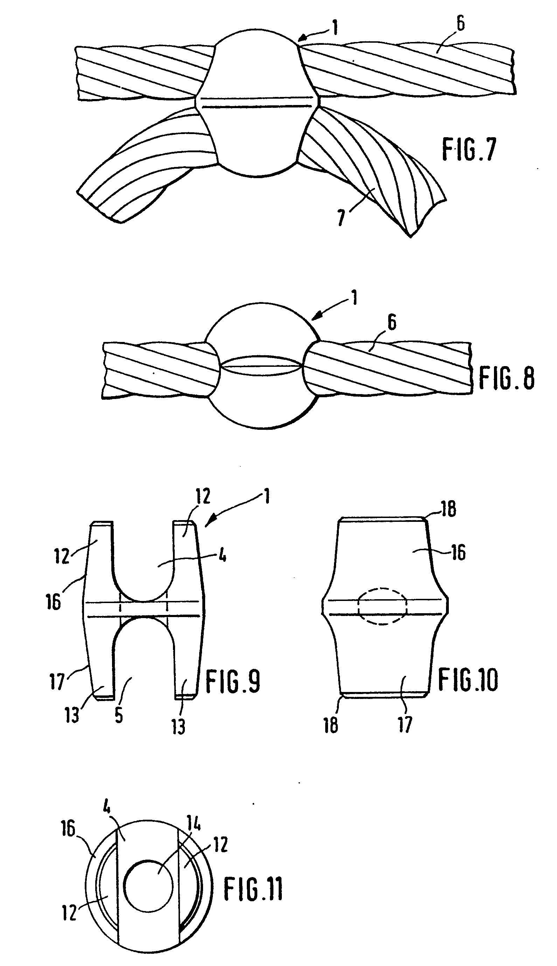

Während die Fig. 1 bis 6 das Ausführungsbeispiel zeigen, bei dem zwei sich kreuzende Seilstränge 8 und 9 verbunden werden, zeigt die Variante nach den Fig. 7 bis 11 ein Anwendungsbeispiel der Erfindung mit parallelen Seilsträngen 6 und 7. Die Klemme 1 besitzt in diesem Falle ebenfalls U-förmige Ausnehmungen 4 und 5, die jedoch, wie die Fig. 9 deutlich erkennen lässt, zueinander parallel gerichtet sind. Bei dieser Bauweise ist es auch nicht möglich, dass sich die Ausnehmungen gegenseitig durchdringen, weil dies die Klemme zerteilen würde. Um aber dennoch eine optimale Verformbarkeit sicherzustellen, empfiehlt es sich, im Inneren der Klemme einen Kanal 14 vorzusehen.

Die Ausbildung der Aussenfläche als Doppelkegel 16 und 17 und auch die Anbringung der Abschrägung 18 entspricht dem oben beschriebenen Ausführungsbeispiel der Fig. 1 bis 6.

Wegen der Besonderheiten der Ausführungsform nach den Fig. 7 bis 11 weicht die fertige Klemme 1 in diesem Falle etwas mehr von der Kugelgestalt ab. In der Ebene der beiden Seilstränge 6 und 7 werden die Abmessungen geringfügig grösser sein, als beispielsweise senkrecht hierzu. Diese Abweichungen sind jedoch geringfügig.

Überraschenderweise ist gefunden worden, dass das Ausführungsbeispiel nach den Fig. 7 bis 11 mit dem gleichen Werkzeug verarbeitet werden kann, wie das Ausführungsbeispiel der Fig. 1 bis 6. Dabei ist es nur notwendig, den Werkzeugteil 20 gegenüber dem Werkzeugteil 19 um 90° zu drehen, so dass jeweils Ausnehmungen 23 oder Ausnehmungen 24 zusammentreffen. Die Ausnehmungen 23 sind in diesem Falle ohne Funktion und am Ende des Pressvorganges werden die Werkzeuge einen Abstand voneinander einhalten.

Die Fig. 12 und 13 deuten eine Variante einer Klemme an, bei der die Begrenzungen 15 der Wände 12 und 13 der U-förmigen Ausnehmungen 4 und 5 abgeschrägt sind. Diese Abschrägung wird dann auch an der fertigen Klemme erhalten. Durch eine solche Abschrägung ist die Beweglichkeit der in der Klemme gehaltenen Seile etwas verbessert und die Gefahr, dass die Begrenzungen der Aussenwände scharfkantig in das Seil einschneiden, ist beseitigt.

Die Abschrägungen 15 können selbstverständlich auch bei einer Klemme angewandt werden, bei der die U-förmigen Ausnehmungen sich kreuzen, wie dies bei den Ausnehmungen 2 und 3 des Ausführungsbeispiels der Fig. 1 bis 6 gezeigt sind.

Wenn im Zusammenhang mit der Erfindung von einer Kugelform gesprochen wird, die die Klemme nach der Verformung einnehmen soll, so ist darunter nicht nur eine geometrisch exakte Kugel zu verstehen. Es sind auch Rotationskörper kugelähnlich, bei denen zwischen den einzelnen Aussenabmessungen Differenzen bestehen. Wenn auch eine gewölbte Aussenform bei der fertigen Klemme in der Regel zu bevorzugen ist und die besten Ergebnisse bringt, so können doch auch Aussenformen angewandt werden, die aus einzelnen in sich ebenen Flächen oder aus Flächen bestehen, die eine schwächere Wölbung aufweisen als die entsprechende Kugelform.

**Patentansprüche**

1. Klemme zur Verbindung von Seilen, insbesondere zur Bildung von Netzen, bestehend aus einem unter Druck verformbaren Werkstoff mit zwei auf gegenüberliegenden Seiten der einstückigen Klemme (1) angeordneten U-förmigen Ausnehmungen (2, 3; 4, 5) in die die zu verbindenden Seilstränge (6, 7; 8, 9) einlegbar sind, wobei die schenkelartigen Wände (10, 11; 12, 13) der U-förmigen Ausnehmungen nach dem Einlegen der Seilstränge gegeneinander gedrückt und verformt werden, um je einen den Seilstrang umschliessenden Ring zu bilden, dadurch gekennzeichnet, dass die Klemme vor der Verformung im wesentlichen die Form eines Doppelkegels (16, 17) aus zwei Kegelstümpfen aufweist, wobei die U-förmigen Ausnehmungen jeweils im Kegelstumpf angeordnet sind und dass nach dem Verformen die Aussenabmessungen der Klemme in allen Richtungen annähernd übereinstimmen.

2. Klemme nach Anspruch 1, dadurch gekennzeichnet, dass der Kegelwinkel ca. 10 bis 20° vorzugsweise 15° beträgt.

3. Klemme nach Anspruch 1 oder 2, dadurch gekennzeichnet, dass die Summe der Tiefe der beiden Ausnehmungen (2, 3; 4, 5) annähernd der Klemmenhöhe entspricht.

4. Klemme nach einem oder mehreren der vorhergehenden Ansprüche, dadurch gekennzeichnet, dass bei sich kreuzenden Ausnehmungen (4, 5) die beiden Ausnehmungen sich teilweise durchdringen.

5. Klemme nach einem oder mehreren der vorhergehenden Ansprüche, gekennzeichnet durch einen Kanal (14) im Inneren der Klemme, der die Ausnehmungen (2, 3) verbindet.

**Claims**

1. A clip for the connection of cables and ropes, particularly in the formation of networks, comprising a pressure-deformable material having two U-shaped openings (2, 3; 4, 5) arranged at opposite sides of the integral clip (1) and in which the length of cable (rope) (6, 7; 8, 9) to be connected can be laid, the limbforming walls (10, 11; 12, 13) of the U-shaped openings being pressed against one another after the cable (rope) lengths have been laid therein and deformed in order in each case to form a ring around the cable (rope) length, characterised in that before the deformation the clip has substantially the form of a double cone (16, 17) consisting of two truncated cones, each of the U-shaped openings being arranged in the truncated cone, and that after the deformation the outer dimensions of the clip are approximately the same in all directions.

2. A clip according to claim 1, characterised in that the cone angle is approximately 10 to 20°, and preferably 15°.

3. A clip according to claims 1 or 2, characterised in that the sum of the depths of the two openings (2, 3; 4, 5) corresponds approximately to the height of the clip.

4. A clip in accordance with one or more of the preceding claims, characterised in that where openings (4, 5) cross, the two openings pass partially through one another.

5. A clip in accordance with one or more of the preceding claims, characterised by a channel (14) in the clip connecting the openings (2, 3).

## Revendications

1. Serre-fils ou pince pour réunir des fils ou câbles, en particulier pour la réalisation de réseaux ou filets, constitué en un matériau déformable sous pression et présentant deux évidements (2, 3; 4, 5) en forme de U, disposés sur des faces opposées du serre-fil (1) monobloc, dans lesquels peuvent être disposés les brins de câbles (6, 7; 8, 9) devant être réunis, les parois (10, 11; 12, 13) en forme de branches des évidements en forme de U étant pressées l'une vers l'autre et déformées après la disposition des brins de câbles, pour former chacune un anneau entourant l'un des brins de câble, caractérisé en ce que le serre-fils ou pince, avant la déformation, présente sensiblement la forme d'un double cône (16, 17) constitué par deux troncs de cône, les évidements en forme de U étant disposés dans chaque tronc de cône et en ce que, après la déformation, les dimensions extérieures du serre-fils sont sensiblement égales dans toutes les directions.

2. Serre-fils selon la revendication 1, caractérisé en ce que l'angle du cône est de 10 à 20°, avantageusement 15°.

3. Serre-fils selon la revendication 1 ou la revendication 2, caractérisé en ce que la somme des profondeurs des deux évidements (2, 3; 4, 5) correspond sensiblement à la hauteur du serre-fils.

4. Serre-fils selon une ou plusieurs des revendications précédentes, caractérisé en ce que, pour des évidements (4, 5) en croix, les deux évidements s'interpénètrent partiellement.

5. Serre-fils selon une ou plusieurs des revendications précédentes, caractérisé par un canal (14) interne au serre-fils qui relie les évidements (2, 3).

FIG.1

FIG.2

FIG.3

FIG.4

FIG.5

FIG.6

**FIG.7**

**FIG.8**

**FIG.9**

**FIG.10**

**FIG.11**

FIG.12

FIG.13

FIG.14